# EUROPÄISCHE PATENTSCHRIFT

(11) **EP 3 491 473 B1**
(45) Veröffentlichungstag und Bekanntmachung des Hinweises auf die Patenterteilung: **03.11.2021**
(21) Anmeldenummer: 17746390.8
(22) Anmeldetag: 19.07.2017
(51) Int. Cl.: G05D 1/00

(54) **KOORDINIERUNG VON PFADEN MEHRERER BEWEGLICHER MASCHINEN**
COORDINATION OF PATHS OF A PLURALITY OF MOVABLE MACHINES
COORDINATION DE PARCOURS DE PLUSIEURS MACHINES MOBILES

(30) Priorität: 29.07.2016 DE 102016009255
(43) Veröffentlichungstag der Anmeldung: 05.06.2019
(73) Patentinhaber: KUKA Deutschland GmbH, 86165 Augsburg (DE)
(72) Erfinder: MARTENS, Moritz, 86179 Augsburg (DE); GRAMS, Tabea, 86156 Augsburg (DE); LOIBL, Stefan, 86477 Adelsried (DE); KRESSE, Ingo, 86199 Augsburg (DE)
(74) Vertreter: Tillmann, Axel
(86) Internationale Anmeldenummer: PCT/EP2017/000881
(87) Internationale Veröffentlichungsnummer: WO 2018/019411

(56) Entgegenhaltungen:
- WO-A2-2015/011661
- MAZA S ET AL: "Conflict-free AGV routing in bi-directional network", EMERGING TECHNOLOGIES AND FACTORY AUTOMATION, 2001. PROCEEDINGS. 2001 8TH IEEE INTERNATIONAL CONFERENCE ON OCT. 15-18, 2001, PISCATAWAY, NJ, USA,IEEE, 15. Oktober 2001 (2001-10-15), Seiten 761-764vol.2, XP032155861, DOI: 10.1109/ETFA.2001.997777 ISBN: 978-0-7803-7241-2

## Beschreibung

Die vorliegende Erfindung betrifft ein Verfahren und System zur wenigstens teilweise automatisierten Koordinierung einer Pfadanordnung einer Maschinenanordnung, die einen Pfad wenigstens einer ersten beweglichen Maschine der Maschinenanordnung aufweist, und eines zusätzlichen Pfads wenigstens einer zweiten beweglichen Maschine, sowie ein Computerprogrammprodukt zur Durchführung des Verfahrens.

Insbesondere bei einer Flotte automatisierter geführter Fahrzeuge ("automated guided vehicle" AGV), die vorgegebene Pfade abfahren, sollen Kollisionen verhindert werden.

Hierzu ist es nach betriebsinterner Praxis bekannt, niedriger priorisierte Fahrzeuge anzuweisen, ein Erreichen eines bestimmten Pfadpunktes durch einen höher priorisierten potentiellen Kollisionspartner abzuwarten, bis sie selber ihren Pfadpunkt verlassen dürfen.

Dies kann jedoch zu unnötig langen Wartezeiten führen.

Die WO 2015/011661 A2 zeigt eine Vorrichtung zur Optimierung der Bewegung von automatisiert geführter Fahrzeuge mit einem Verkehrsmanagementmodul zur Verwaltung der Bewegung einiger automatisiert geführter Fahrzeuge auf Routen/Pfade eines Graphs, welcher durch Segmente unterteilt ist und Knoten aufweist, welche die Segmente verbinden.

Die wissenschaftliche Veröffentlichung "Conflict-free AGV routing in bi-directional network" von Maza S et al. zeigt ein Verfahren, wonach ein Algorithmus verendet wird, um die optimale, konfliktfreie Route eines für ein automatisiert geführtes Fahrzeug zu finden, welches sich auf einem bi-direktionalen Netzwerk bewegt, wobei der aktuelle Status des Verkehrs berücksichtigt wird.

Aufgabe der vorliegenden Erfindung ist es, das gemeinsame Abfahren von Pfaden durch zwei oder mehr bewegliche Maschinen zu verbessern.

Diese Aufgabe wird durch ein Verfahren mit den Merkmalen des Anspruchs 1 gelöst. Ansprüche 11, 12 stellen ein System bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist eine Maschinenanordnung eine oder mehrere bewegliche Maschinen auf, die vorliegend als erste (bewegliche) Maschinen bezeichnet werden und für die jeweils ein Pfad, insbesondere vorab und/oder fest, vorgegeben wird bzw. ist.

Zusätzlich ist/sind bzw. wird/werden in einer Ausführung, insbesondere sukzessive, eine oder mehrere bewegliche Maschine(n) vorgesehen, insbesondere hinzugefügt bzw. nachträglich vorgesehen, die vorliegend als zweite (bewegliche) Maschine(n) bezeichnet wird/werden und für die (jeweils) ebenfalls ein Pfad, insbesondere vorab und/oder fest, vorgegeben wird bzw. ist.

Insbesondere kann in einer Ausführung initial die Pfadanordnung durch einen ersten Pfad einer ersten beweglichen Maschine einer initialen Maschinenanordnung, die aus dieser ersten beweglichen Maschine besteht, gebildet sein bzw. werden, der bzw. die in hier beschriebener Weise mit einem zusätzlichen Pfad einer zweiten beweglichen Maschine koordiniert wird. Diese erste und zweite bewegliche Maschine können dann ihrerseits eine (neue) Maschinenanordnung und diese beiden Pfade eine (neue) Pfadanordnung dieser (neuen) Maschinenanordnung bilden, die ihrerseits mit einem zusätzlichen Pfad einer weiteren zweiten beweglichen Maschine koordiniert wird, und so weiter. Auf diese Weise können in einer Ausführung sukzessive drei oder mehr bewegliche Maschinen bzw. deren Pfade koordiniert und gemeinsam kollisions- und endloswarteabhängigkeitsfrei abgefahren werden.

Eine besonders vorteilhafte Anwendung der vorliegenden Erfindung stellt die Koordinierung von AGVs dar. Entsprechend kann in einer Ausführung ein Pfad jeweils eine Fahrbahn eines automatisierten geführten Fahrzeugs aufweisen, insbesondere sein. Die vorliegende Erfindung wird daher nachfolgend insbesondere mit Bezug auf diese besonders vorteilhaften Anwendungen erläutert, ist jedoch nicht hierauf beschränkt. So stellt insbesondere die Koordinierung beweglicher Roboterarme eine andere vorteilhafte Anwendung der vorliegenden Erfindung dar. Entsprechend kann in einer Ausführung ein Pfad jeweils eine Trajektorie eines beweglichen Roboterarms aufweisen, insbesondere sein.

Der bzw. die Pfad(e) der ersten Maschine(n) wird/werden zur kompakteren Darstellung vorliegend als Pfadanordnung der Maschinenanordnung der ersten Maschine(n) bezeichnet. Sie bzw. die Maschinenanordnung wird bzw. ist in einer Ausführung gegenüber dem zusätzlichen Pfad bzw. der zweiten Maschine default- bzw. standardmäßig priorisiert. Mit anderen Worten wird bzw. ist in einer Ausführung eine neu hinzugefügte (zweite) Maschine bzw. deren Pfad gegenüber der bzw. den bereits vorgesehenen, insbesondere koordinierten, (ersten) Maschine(n) bzw. Pfad(en) default- bzw. standardmäßig niedriger priorisiert und muss default- bzw. standardmäßig zur Vermeidung einer Kollision mit einer ersten Maschine stets auf diese warten. Hierdurch wird eine vorteilhafte Grundkoordinierung realisiert.

Nach einer Ausführung der vorliegenden Erfindung weist ein Verfahren zur vollständig oder teilweise automatisierten Koordinierung der Pfadanordnung der Maschinenanordnung und des zusätzlichen Pfads bzw. der zusätzlichen Pfade der zweiten beweglichen Maschine(n) jeweils den Schritt auf: Festlegen wenigstens einer Warteabhängigkeit zwischen einem Pfadpunkt eines Pfades einer ersten Maschine der Maschinenanordnung und einem Pfadpunkt des zusätzlichen Pfades zur Vermeidung (jeweils) einer Kollision der zweiten Maschine mit dieser ersten Maschine mit der Maßgabe, dass ein, insbesondere prognostizierter, Wert eines Gütekriteriums für ein gemeinsames, insbesondere endloswarteabhängigkeitsfreies, Abfahren der Pfadanordnung und des zusätzlichen Pfades unter Einhaltung dieser Warteabhängigkeit nicht schlechter, insbesondere (sogar) besser, ist als unter Einhaltung einer hierzu alternativen gegensinnigen Warteabhängigkeit zwischen einem, insbesondere anderen oder demselben, Pfadpunkt des Pfades der ersten Maschine und einem, insbesondere anderen oder demselben, Pfadpunkt des zusätzlichen Pfades zur Vermeidung derselben Kollision.

Das Gütekriterium bzw. sein(e) Wert(e) können in einer Ausführung ein- oder mehrdimensional sein und/oder von einer Ablaufzeit einer oder mehrerer der Maschinen zum gemeinsamen, insbesondere endloswarteabhängigkeitsfreien, Abfahren der Pfadanordnung und des zusätzlichen Pfades abhängen, insbesondere von diesen, insbesondere gewichteten und/oder hierarchisch verknüpften, Ablaufzeit(en) abhängen bzw. diese angeben.

Ein Gütekriterium(swert) ist in einer Ausführung schlechter, falls die Ablaufzeit einer oder mehrerer, insbesondere höher priorisierter, Maschinen länger ist, und/oder besser, falls die Ablaufzeit wenigstens einer Maschine kürzer ist, insbesondere nur, falls dabei die Ablaufzeit einer oder mehrerer, insbesondere aller höher priorisierter, anderer Maschinen nicht länger ist.

In einer Ausführung ist ein bzw. das(der) Gütekriterium(swert) (bereits) schlechter, falls die Ablaufzeit wenigstens einer höher priorisierten Maschine, insbesondere einer Maschine der Maschinenanordnung, länger ist, selbst falls die Ablaufzeit wenigstens einer niedriger priorisierter Maschine, insbesondere der zweiten Maschine, kürzer ist, und/oder ein Gütekriterium(swert) (nur) besser, falls die Ablaufzeiten aller in dem Gütekriterium berücksichtigten Maschinen, insbesondere aller Maschine der Maschinenanordnung, insbesondere aller zu koordinierender Maschinen, nicht länger und wenigstens eine dieser Ablaufzeiten kürzer ist. Zusätzlich oder alternativ kann in einer Ausführung eine kürzere Ablaufzeit wenigstens einer höher priorisierten Maschine eine längere Ablaufzeit wenigstens einer niedriger priorisierten Maschine kompensieren bzw. einen besseren Gütekriterium(swert) bewirken.

Weisen beispielsweise bei drei Maschinen unter Einhaltung einer Warteabhängigkeit eine am höchsten priorisierte der Maschinen eine Ablaufzeit T1,1, eine mittelpriorisierte der Maschinen eine Ablaufzeit T2,1 und eine am niedrigsten priorisierte der Maschinen eine Ablaufzeit T3,1 sowie unter Einhaltung einer hierzu alternativen gegensinnigen Warteabhängigkeit die am höchsten priorisierte Maschine eine Ablaufzeit T1,2, die mittelpriorisierte Maschine eine Ablaufzeit T2,2 und die am niedrigsten priorisierte Maschine eine Ablaufzeit T3,2 auf, so kann in einer Ausführung der Wert eines Gütekriteriums für ein gemeinsames Abfahren unter Einhaltung der einen Warteabhängigkeit besser sein als der Wert des Gütekriteriums unter Einhaltung der hierzu alternativen gegensinnigen Warteabhängigkeit, sofern gilt: (T1,1 ≤ T1 und T2,1 ≤ T2, 2 und T3,1 < T3, 2) oder (T1,1 ≤ T1 und T2,1 < T2, 2 und T3,1 ≤ T3, 2) oder (T1,1 < T1 und T2,1 ≤ T2, 2 und T3,1 ≤ T3, 2), also nur, falls sich wenigstens eine der Ablaufzeiten verkürzt, ohne dass sich wenigstens eine andere der Ablaufzeiten verlängert. Gleichermaßen kann in einer Ausführung der Wert des Gütekriteriums für das gemeinsame Abfahren unter Einhaltung der einen Warteabhängigkeit besser sein als der Wert des Gütekriteriums unter Einhaltung der hierzu alternativen gegensinnigen Warteabhängigkeit, sofern gilt: (T1,1 ≤ T1 und T2,1 ≤ T2, 2 und T3,1 < T3, 2) oder (T1,1 ≤ T1 und T2,1 < T2, 2) oder (T1,1 < T1), also stets, wenn sich die Ablaufzeit einer höher priorisierten Maschine verkürzt. Dies stellt sozusagen eine priorisierte Paretooptimalität dar. Zusätzlich oder alternativ sind natürlich auch weitere, insbesondere gewichtete und/oder hierarchisierte, Verknüpfungen von Ablaufzeiten, beispielsweise Paretooptimalität, insbesondere unter allen oder unter gleich priorisierten Maschinen, eine Gesamt- bzw. Maximalablaufzeit oder dergleichen, möglich.

Entsprechend weist das Verfahren in einer Ausführung jeweils den Schritt auf: Festlegen wenigstens einer Warteabhängigkeit zwischen einem Pfadpunkt eines Pfades einer ersten Maschine der Maschinenanordnung und einem Pfadpunkt des zusätzlichen Pfades zur Vermeidung (jeweils) einer Kollision der zweiten Maschine mit dieser ersten Maschine mit der Maßgabe, dass wenigstens eine, insbesondere prognostizierte und/oder höher priorisierte, Ablaufzeit zum gemeinsamen, insbesondere endloswarteabhängigkeitsfreien, Abfahren der Pfadanordnung und des zusätzlichen Pfades unter Einhaltung dieser Warteabhängigkeit nicht länger, insbesondere (sogar) kürzer, ist als unter Einhaltung einer hierzu alternativen gegensinnigen Warteabhängigkeit zwischen einem, insbesondere anderen oder demselben, Pfadpunkt des Pfades der ersten Maschine und einem, insbesondere anderen oder demselben, Pfadpunkt des zusätzlichen Pfades zur Vermeidung derselben Kollision.

Nach einer Ausführung der vorliegenden Erfindung ist ein System zur vollständig oder teilweise automatisierten Koordinierung der Pfadanordnung der Maschinenanordnung und des zusätzlichen Pfads bzw. der zusätzlichen Pfade der zweiten beweglichen Maschine(n), insbesondere hard- und/oder software-, insbesondere programmtechnisch, zur Durchführung eines hier beschriebenen Verfahrens eingerichtet und/oder weist auf: Mittel zum Festlegen wenigstens einer Warteabhängigkeit zwischen einem Pfadpunkt eines Pfades einer ersten Maschine der Maschinenanordnung und einem Pfadpunkt des zusätzlichen Pfades zur Vermeidung (jeweils) einer Kollision der zweiten Maschine mit dieser ersten Maschine mit der Maßgabe, dass ein, insbesondere prognostizierter, Wert eines Gütekriteriums für ein gemeinsames, insbesondere endloswarteabhängigkeitsfreies, Abfahren, insbesondere wenigstens eine, insbesondere prognostizierte, Ablaufzeit zum gemeinsamen, insbesondere endloswarteabhängigkeitsfreien, Abfahren, der Pfadanordnung und des zusätzlichen Pfades unter Einhaltung dieser Warteabhängigkeit nicht schlechter bzw. länger, insbesondere (sogar) besser bzw. kürzer, ist als unter Einhaltung einer hierzu alternativen gegensinnigen Warteabhängigkeit zwischen einem, insbesondere anderen oder demselben, Pfadpunkt des Pfades der ersten Maschine und einem, insbesondere anderen oder demselben, Pfadpunkt des zusätzlichen Pfades zur Vermeidung derselben Kollision.

Hierdurch kann in einer Ausführung ein Gütekriterium(swert) für ein gemeinsames, insbesondere endloswarteabhängigkeitsfreies, Abfahren der Pfadanordnung und des zusätzlichen Pfades unter Einhaltung dieser Warteabhängigkeit und damit Vermeidung dieser Kollision vorteilhaft verbessert, insbesondere wenigstens eine Ablaufzeit zum gemeinsamen, insbesondere endloswarteabhängigkeitsfreien, Abfahren der Pfadanordnung und des zusätzlichen Pfades unter Einhaltung dieser Warteabhängigkeit und damit Vermeidung dieser Kollision vorteilhaft reduziert werden.

Ein Pfad kann in einer Ausführung jeweils mehrere Pfadpunkte und Transfers, insbesondere Transferzeiten, zwischen den Pfadpunkten aufweisen, insbesondere hierdurch vorgegeben sein bzw. werden, insbesondere vorab bzw. vor dem gemeinsamen Abfahren und/oder während des gemeinsamen Abfahrens.

Eine Warteabhängigkeit zwischen einem Pfadpunkt eines Pfades einer ersten Maschine der Maschinenanordnung und einem Pfadpunkt des zusätzlichen Pfades zur Vermeidung einer Kollision der zweiten Maschine mit dieser ersten Maschine gestattet in einer Ausführung ein Verlassen eines Pfadpunktes des einen dieser beiden Pfade erst nach Erreichen eines Pfadpunktes des anderen dieser beide Pfade zur Vermeidung einer Kollision, eine hierzu alternative gegensinnige Warteabhängigkeit ein Verlassen eines Pfadpunktes des anderen dieser beiden Pfade erst nach Erreichen eines Pfadpunktes des einen dieser beiden Pfade zur Vermeidung dieser Kollision.

Insbesondere gestattet in einer Ausführung eine Warteabhängigkeit im Sinne der vorliegenden Erfindung ein Verlassen eines Pfadpunktes des zusätzlichen Pfades (durch die zweite Maschine) erst nach Erreichen eines Pfadpunktes eines Pfades einer ersten Maschine der Maschinenanordnung (durch die erste Maschine) und eine hierzu alternative gegensinnige Warteabhängigkeit ein Verlassen eines Pfadpunktes des Pfades dieser ersten Maschine (durch sie) erst nach Erreichen eines Pfadpunktes des zusätzlichen Pfades (durch die zweite Maschine). Gleichermaßen gestattet in einer Ausführung eine Warteabhängigkeit im Sinne der vorliegenden Erfindung ein Verlassen eines Pfadpunktes eines Pfades einer ersten Maschine der Maschinenanordnung (durch die erste Maschine) erst nach Erreichen eines Pfadpunktes des zusätzlichen Pfades (durch die zweite Maschine) und eine hierzu alternative gegensinnige Warteabhängigkeit ein Verlassen eines Pfadpunktes des zusätzlichen Pfades (durch die zweite Maschine) erst nach Erreichen eines Pfadpunktes des Pfades der ersten Maschine (durch die erste Maschine).

Unter einem gemeinsamen Abfahren der Pfadanordnung und des zusätzlichen Pfades wird vorliegend insbesondere ein koordiniertes bzw. aufeinander abgestimmtes, insbesondere wenigstens teilweise gleichzeitiges und/oder sukzessives, Abfahren der Pfade durch die Maschinen verstanden.

Unter einem endloswarteabhängigkeits- bzw. blockadefreien Abfahren wird vorliegend insbesondere ein Abfahren unter Einhaltung einer oder mehrerer Warteabhängigkeiten verstanden, bei dem alle Pfade in endlicher Zeit abgefahren werden bzw. kein Zyklus bzw. sogenannter "Deadlock" bzw. keine Blockade auftritt, bei dem bzw. der jede Maschinen jeweils auf eine andere der Maschine wartet und somit keine Maschine ihren Pfad (weiter) abfahren kann, vergleichbar etwa einer vollbelegten Kreuzung zweier gleich priorisierter Pfade mit der Warteabhängigkeit "rechts vor links" und vier Fahrzeugen.

In einer Ausführung wird bzw. ist die (durch die Warteabhängigkeit zu vermeidende) Kollision vorab als mögliche Kollision beim gemeinsamen Abfahren der Pfadanordnung und des zusätzlichen Pfades ohne Einhaltung dieser (wenigstens einen festgelegten) Warteabhängigkeit ermittelt. Entsprechend weist das System in einer Ausführung auf Mittel zum Ermitteln der Kollision vorab als mögliche Kollision beim gemeinsamen Abfahren der Pfadanordnung und des zusätzlichen Pfades ohne Einhaltung der wenigstens einen festgelegten Warteabhängigkeit. Hierdurch können in einer Ausführung Kollisionen vorteilhaft vermieden werden.

In einer Weiterbildung wird, insbesondere sukzessive, für jeden (Plan)Schritt bzw. Transfer von einem Pfadpunkt zu einem darauffolgenden Pfadpunkt des zusätzlichen Pfades jeweils ermittelt, ob dabei ein vorgegebener Abstand zu irgendeinem Pfadpunkt oder Transfer irgendeines Pfades der Pfadanordnung unterschritten, insbesondere der Pfadpunkt oder Transfer irgendeines Pfades der Pfadanordnung erreicht bzw. geschnitten, wird. In einem solchen Fall wird eine mögliche Kollision ermittelt. Hierdurch können in einer Ausführung mögliche Kollisionen vorteilhaft vermieden werden.

In einer Ausführung wird eine Warteabhängigkeit zwischen einem Pfadpunkt des Pfades der ersten Maschine und einem Pfadpunkt des zusätzlichen Pfades zur Vermeidung einer Kollision zwischen einem Pfadpunkt des einen Pfades nach, insbesondere unmittelbar nach, der mögliche Kollision und einem Pfadpunkt des anderen Pfades vor, insbesondere unmittelbar vor, der mögliche Kollision ermittelt. Entsprechend weist das System in einer Ausführung auf Mittel zum Ermitteln einer Warteabhängigkeit zwischen einem Pfadpunkt des Pfades der ersten Maschine und einem Pfadpunkt des zusätzlichen Pfades zur Vermeidung einer Kollision zwischen einem Pfadpunkt des einen Pfades nach, insbesondere unmittelbar nach, der mögliche Kollision und einem Pfadpunkt des anderen Pfades vor, insbesondere unmittelbar vor, der mögliche Kollision. Hierdurch können in einer Ausführung Warteabhängigkeit vorteilhaft ermittelt werden.

In einer Weiterbildung wird für einen (Plan)Schritt bzw. Transfer von einem (Anfangs- bzw. Start)Pfadpunkt zu einem darauffolgenden Pfadpunkt eines Pfades jeweils eine Konfliktzone des anderen Pfades ermittelt, die einen erste und einen letzten Pfadpunkt sowie einen oder mehrere Zwischenpfadpunkte aufweisen, wobei die Maschine den (Plan)Schritt bzw. Transfer durchführen darf, falls die andere Maschine sich auf dem ersten oder letzte Pfadpunkt befindet, aber nicht durführen darf, solange sich die andere Maschine auf einem Zwischenpfadpunkt oder einem Transfer von oder zu diesem befindet, um eine Kollision (sicher) zu vermeiden. Dann kann die Warteabhängigkeit zwischen diesem letzten Pfadpunkt und dem (Anfangs- bzw. Start)Pfadpunkt des(Plan)Schritts bzw. Transfers ermittelt werden. Hierdurch können in einer Ausführung Warteabhängigkeiten vorteilhaft ermittelt werden.

In einer Ausführung umfasst das Verfahren die Schritte: für eine oder mehrere mögliche Kollisionen der zweiten Maschine mit der bzw. einer oder mehrerer der ersten Maschine(n) der Maschinenanordnung (jeweils) Ermitteln eines, insbesondere prognostizierten, ersten Wertes des Gütekriteriums für ein gemeinsames, insbesondere endloswarteabhängigkeitsfreies, Abfahren, insbesondere wenigstens einer, insbesondere prognostizierten, ersten Ablaufzeit zum gemeinsamen, insbesondere endloswarteabhängigkeitsfreien, Abfahren, der Pfadanordnung und des zusätzlichen Pfades unter Einhaltung einer ersten Warteabhängigkeit zwischen einem Pfadpunkt des Pfades dieser ersten Maschine und einem Pfadpunkt des zusätzlichen Pfades zur Vermeidung dieser Kollision, insbesondere einer Warteabhängigkeit der zweiten auf die erste Maschine; Ermitteln eines, insbesondere prognostizierten, zweiten Wertes des Gütekriteriums für ein gemeinsames, insbesondere endloswarteabhängigkeitsfreies, Abfahren, insbesondere wenigstens einer, insbesondere prognostizierten, zweiten Ablaufzeit zum gemeinsamen, insbesondere endloswarteabhängigkeitsfreien, Abfahren, der Pfadanordnung und des zusätzlichen Pfades unter Einhaltung einer hierzu alternativen gegensinnigen zweiten Warteabhängigkeit zwischen einem Pfadpunkt des Pfades dieser ersten Maschine und einem Pfadpunkt des zusätzlichen Pfades zur Vermeidung dieser Kollision, insbesondere einer Warteabhängigkeit der ersten auf die zweite Maschine; und Auswählen der ersten oder zweiten Warteabhängigkeit als (die) festgelegte Warteabhängigkeit zur Vermeidung dieser Kollision auf Basis des ersten und zweiten Gütekriteriumwertes, insbesondere der wenigstens einen ersten und zweiten Ablaufzeit, insbesondere der ersten Warteabhängigkeit, falls der erste Gütekriteriumswert nicht schlechter, insbesondere (echt) besser als der zweite Gütekriteriumswert ist, und/oder der zweiten Warteabhängigkeit, falls der zweite Gütekriteriumswert nicht schlechter, insbesondere (echt) besser als der erste Gütekriteriumswert ist, insbesondere falls die erste(n) Ablaufzeit(en) nicht größer, insbesondere (wenigstens eine) (echt) kleiner als die (entsprechende) zweite(n) Ablaufzeiten) ist/sind, insbesondere ohne Verlängerung einer höher priorisierten, und/oder der zweiten Warteabhängigkeit, falls die zweite(n) Ablaufzeit(en) nicht größer, insbesondere (wenigstens eine) (echt) kleiner als die (entsprechende) erste(n) Ablaufzeit(en) ist/sind, insbesondere ohne Verlängerung einer höher priorisierten, insbesondere (nur), sofern ein endloswarteabhängigkeitsfreiens Abfahren der Pfadanordnung und des zusätzlichen Pfades unter Einhaltung dieser Warteabhängigkeit möglich ist.

Entsprechend weist das System in einer Ausführung auf Mittel zum Ermitteln für eine oder mehrere mögliche Kollisionen der zweiten Maschine mit der bzw. einer oder mehrerer der ersten Maschine(n) der Maschinenanordnung (jeweils) eines, insbesondere prognostizierten, ersten Wertes des Gütekriteriums für ein gemeinsames, insbesondere endloswarteabhängigkeitsfreies, Abfahren, insbesondere wenigstens einer, insbesondere prognostizierten, ersten Ablaufzeit zum gemeinsamen, insbesondere endloswarteabhängigkeitsfreien, Abfahren, der Pfadanordnung und des zusätzlichen Pfades unter Einhaltung einer ersten Warteabhängigkeit zwischen einem Pfadpunkt des Pfades dieser ersten Maschine und einem Pfadpunkt des zusätzlichen Pfades zur Vermeidung dieser Kollision, insbesondere einer Warteabhängigkeit der zweiten auf die erste Maschine, eines, insbesondere prognostizierten, zweiten Wertes des Gütekriteriums für ein gemeinsames, insbesondere endloswarteabhängigkeitsfreies, Abfahren, insbesondere wenigstens einer, insbesondere prognostizierten, zweiten Ablaufzeit zum gemeinsamen, insbesondere endloswarteabhängigkeitsfreien, Abfahren, der Pfadanordnung und des zusätzlichen Pfades unter Einhaltung einer hierzu alternativen gegensinnigen zweiten Warteabhängigkeit zwischen einem Pfadpunkt des Pfades dieser ersten Maschine und einem Pfadpunkt des zusätzlichen Pfades zur Vermeidung dieser Kollision, insbesondere einer Warteabhängigkeit der ersten auf die zweite Maschine; und Auswählen der ersten oder zweiten Warteabhängigkeit als (die) festgelegte Warteabhängigkeit zur Vermeidung dieser Kollision auf Basis des ersten und zweiten Gütekriteriumwertes, insbesondere der wenigstens einen ersten und zweiten Ablaufzeit, insbesondere der ersten Warteabhängigkeit, falls der erste Gütekriteriumswert nicht schlechter, insbesondere (echt) besser als der zweite Gütekriteriumswert ist, und/oder der zweiten Warteabhängigkeit, falls der zweite Gütekriteriumswert nicht schlechter, insbesondere (echt) besser als der erste Gütekriteriumswert ist, insbesondere falls die erste(n) Ablaufzeit(en) nicht größer, insbesondere (wenigstens eine) (echt) kleiner als die (entsprechende) zweite(n) Ablaufzeit(en) ist/sind, insbesondere ohne Verlängerung einer höher priorisierten, und/oder der zweiten Warteabhängigkeit, falls die zweite(n) Ablaufzeit(en) nicht größer, insbesondere (wenigstens eine) (echt) kleiner als die (entsprechende) erste(n) Ablaufzeit(en) ist/sind, insbesondere ohne Verlängerung einer höher priorisierten, insbesondere (nur), sofern ein endloswarteabhängigkeitsfreies Abfahren der Pfadanordnung und des zusätzlichen Pfades unter Einhaltung dieser Warteabhängigkeit möglich ist.

Mit anderen Worten wird in einer Ausführung probeweise eine Warteabhängigkeit, infolge der die zweite Maschine auf die erste Maschine warten muss, probeweise umgekehrt bzw. durch eine alternative gegensinnige Warteabhängigkeit ersetzt, infolge der die erste Maschine auf die zweite Maschine warten muss, um dieselbe (mögliche) Kollision zu vermeiden, und dann diejenige Warteabhängigkeit festgelegt, bei der sich der besser Gütekriteriumswert für ein gemeinsames, insbesondere endloswarteabhängigkeitsfreies, Abfahren, insbesondere die kürzere Ablaufzeit für wenigstens eine der Maschinen, insbesondere ohne Verlängerung der Ablaufzeit wenigstens einer höher priorisierten Maschine, zum gemeinsamen endloswarteabhängigkeitsfreien Abfahren, der Pfadanordnung und des zusätzlichen Pfades ergibt.

Hierdurch kann in einer Ausführung ein Gütekriterium(swert) für ein gemeinsames, insbesondere endloswarteabhängigkeitsfreies, Abfahren der Pfadanordnung und des zusätzlichen Pfades unter Einhaltung dieser Warteabhängigkeit und damit Vermeidung dieser Kollision vorteilhaft verbessert, insbesondere wenigstens eine Ablaufzeit zum gemeinsamen endloswarteabhängigkeitsfreien Abfahren der Pfadanordnung und des zusätzlichen Pfades unter Einhaltung dieser Warteabhängigkeit und damit Vermeidung dieser Kollision vorteilhaft reduziert werden.

Insbesondere durch eine solche Umkehrung einer Warteabhängigkeit kann sich ungewollt eine Endloswarteabhängigkeit bzw. ein sogenannter Zyklus bzw. "Deadlock" ergeben, bei dem jede Maschine jeweils auf eine andere der Maschinen wartet.

Daher weist in einer Ausführung das Verfahren die Schritte auf: für wenigstens eine Warteabhängigkeit zwischen einem Pfadpunkt des Pfades einer ersten Maschine der Maschinenanordnung und einem Pfadpunkt des zusätzlichen Pfades (jeweils) Ersetzen wenigstens einer, insbesondere hierzu gegensinnigen, weiteren Warteabhängigkeit, insbesondere einer weiteren Warteabhängigkeit zwischen einem Pfadpunkt des Pfades der ersten Maschine und einem Pfadpunkt des zusätzlichen Pfades, durch eine zu dieser weiteren Warteabhängigkeit alternative gegensinnige andere Warteabhängigkeit, falls die eine Warteabhängigkeit eine Endloswarteabhängigkeit verursacht, insbesondere durch eine alternative gegensinnige andere Warteabhängigkeit zwischen einem Pfadpunkt des Pfades der ersten Maschine und einem Pfadpunkt des zusätzlichen Pfades. Entsprechend weist das System in einer Ausführung auf Mittel zum Ersetzen für wenigstens eine Warteabhängigkeit zwischen einem Pfadpunkt des Pfades einer ersten Maschine der Maschinenanordnung und einem Pfadpunkt des zusätzlichen Pfades einer, insbesondere hierzu gegensinnigen, weiteren Warteabhängigkeit, insbesondere zwischen einem Pfadpunkt des Pfades der ersten Maschine und einem Pfadpunkt des zusätzlichen Pfades, durch eine zu dieser weiteren Warteabhängigkeit alternative gegensinnige andere Warteabhängigkeit, falls die eine Warteabhängigkeit eine Endloswarteabhängigkeit verursacht, insbesondere durch eine alternative gegensinnige andere Warteabhängigkeit zwischen einem Pfadpunkt des Pfades der ersten Maschine und einem Pfadpunkt des zusätzlichen Pfades.

Insbesondere wird in einer Ausführung eine Endloswarteabhängigkeit bzw. ein sogenannter Zyklus bzw. "Deadlock", der sich durch eine ermittelte bzw. eingeführte Warteabhängigkeit, insbesondere eine Umkehrung einer Warteabhängigkeit in eine alternative gegensinnige Warteabhängigkeit, ergeben würde, dadurch vermieden bzw. aufgelöst, dass wenigstens eine weitere Warteabhängigkeit, die diese Endloswarteabhängigkeit mit verursacht bzw. diesen Zyklus bzw. "Deadlock" mit schließt, durch eine alternative gegensinnige andere Warteabhängigkeit ersetzt wird. Hierdurch kann in einer Ausführung eine Endloswarteabhängigkeit bzw. ein sogenannter Zyklus bzw. "Deadlock" vermieden bzw. aufgelöst werden. In einer Ausführung werden sukzessive solange versuchsweise weitere Warteabhängigkeiten, die eine Endloswarteabhängigkeit bzw. einen Zyklus verursachen, durch alternative gegensinnige andere Warteabhängigkeiten ersetzt, bis die entsprechende Endloswarteabhängigkeit aufgelöst bzw. der entsprechende Zyklus entfernt wurde oder alle Warteabhängigkeiten, die diese(n) (mit) verursachen, abgearbeitet bzw. durch alternative gegensinnige andere Warteabhängigkeiten ersetzt wurden.

Sofern (erkannt wird, dass) auch durch Ersetzen einer oder mehrerer, insbesondere aller, weiterer Warteabhängigkeiten eine Endloswarteabhängigkeit bzw. ein sogenannter Zyklus bzw. "Deadlock", der sich durch eine ermittelte bzw. eingeführte Warteabhängigkeit, insbesondere eine Umkehrung einer Warteabhängigkeit in eine alternative gegensinnige Warteabhängigkeit, ergeben würde, nicht vermieden bzw. aufgelöst werden kann, wird in einer Ausführung diese eine Warteabhängigkeit nicht eingeführt bzw. die Einführung rückgängig gemacht, insbesondere diese Umkehrung einer Warteabhängigkeit in eine alternative gegensinnige Warteabhängigkeit verworfen bzw. rückgängig gemacht bzw. die nicht umgekehrte Warteabhängigkeit als Warteabhängigkeit beibehalten bzw. ermittelt.In einer Ausführung werden eine oder mehrere der nicht eingeführten bzw. rückgängig gemachten bzw. verworfenen Warteabhängigkeiten gesperrt, so dass sie bei der (weiteren) Koordinierung bzw. zukünftig nicht mehr ausprobiert werden.

In einer Ausführung wird das Verfahren teilweise oder vollständig vor und/oder während einem gemeinsamen Abfahren der Pfadanordnung und des zusätzlichen Pfades durchgeführt bzw. ist hierzu eingerichtet. Entsprechend führt in einer Ausführung das System das Verfahren teilweise oder vollständig vor und/oder während einem gemeinsamen Abfahren der Pfadanordnung und des zusätzlichen Pfades durch bzw. ist hierzu eingerichtet. Insbesondere kann somit in einer Ausführung das gemeinsame Abfahren der, insbesondere vorab, vorgegebenen Pfadanordnung und des, insbesondere vorab, vorgegebenen zusätzlichen Pfades offline und/oder online koordiniert werden, wobei in einer Weiterbildung bei einer Online-Koordinierung während einem gemeinsamen Abfahren insbesondere bereits abgefahrene Teile der Pfade wegfallen und/oder noch abzufahrende Teile der Pfade erst sukzessive berücksichtigt, insbesondere koordiniert werden. Gütekriteriumswerte, insbesondere Ablaufzeiten, können in einer Ausführung insbesondere auf Basis vorgegebener oder vorab ermittelter Transferzeiten zwischen Pfadpunkten der Pfade prognostiziert werden bzw. sein.

In einer Ausführung werden bzw. sind die Pfadanordnung und der zusätzliche Pfad in Form eines gerichteten azyklischen bzw. zyklusfreien Graphen, Pfadpunkte in Form von Knoten (des Graphen) und Warteabhängigkeiten in Form von gerichteten Querkanten zwischen Knoten der Pfadanordnung und des zusätzlichen Pfads vorgegeben. Hierdurch kann in einer Ausführung die Koordinierung rechentechnisch vorteilhaft realisiert werden.

In einer Ausführung umfasst das Koordinieren insbesondere das Führen, insbesondere Leiten, und/oder Steuern der Maschinen.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Maschinen koordinieren, insbesondere führen und/oder steuern, kann.

In einer Ausführung werden ein oder mehrere, insbesondere alle, Schritte des Verfahrens vollständig oder teilweise automatisiert durchgeführt, insbesondere durch die Steuerung bzw. ihr(e) Mittel.

Weitere Vorteile und Merkmale ergeben sich aus den Unteransprüchen und den Ausführungsbeispielen. Hierzu zeigt, teilweise schematisiert,:
- Fig. 1:: eine Pfadanordnung einer ersten Maschine und einen hiermit zu koordinierenden zusätzlichen Pfad einer zweiten Maschine nach einer Ausführung der vorliegenden Erfindung;
- Fig. 2:: einen gerichteten Graphen zum Koordinieren der Pfade nach einer Ausführung der vorliegenden Erfindung; und
- Fig. 3:: ein Verfahren zum Koordinieren der Pfade nach einer Ausführung der vorliegenden Erfindung.

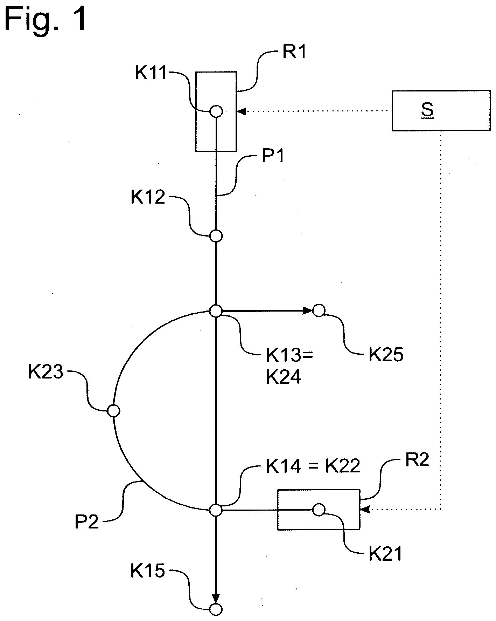

Fig. 1 zeigt eine Maschinenanordnung, die zur besseren Übersichtlichkeit nur aus einer ersten beweglichen Maschine in Form eines AGVs R1 besteht, eine zweite bewegliche Maschine in Form eines weiteren AGVs R2, und ein System S zur automatisierten Koordinierung einer Pfadanordnung der Maschinenanordnung, die entsprechend aus einem vorgegebenen Pfad P1 des AGVs R1 besteht, und eines zusätzlichen Pfads P2 des AGVs R2. Das System S führt die AGVs R1, R2 und ist hierzu mit diesen signalverbunden, wie in Fig. 1 punktiert angedeutet.

Der Pfad P1 besteht exemplarisch aus fünf Pfadpunkten K11 - K15 und Transfers mit vorgegebenen oder vorab ermittelten Transferzeiten zwischen diesen, der Pfad P2 exemplarisch ebenfalls aus fünf Pfadpunkten K21 - K25 und Transfers zwischen diesen mit vorgegebenen oder vorab ermittelten Transferzeiten.

Man erkennt, dass die AGVs R1, R2 beim gemeinsamen Abfahren der Pfade P1, P2 bei den Pfadpunkten K14 = K22 und K13 = K24 kollidieren könn(t)en. Dies ist zur besseren Übersichtlichkeit so gewählt, eine Kollision könnte gleichermaßen durch einen Schnitt zweier Transfers oder einen zu dichten Abstand zwischen Pfadpunkten oder Transfers erfolgen.

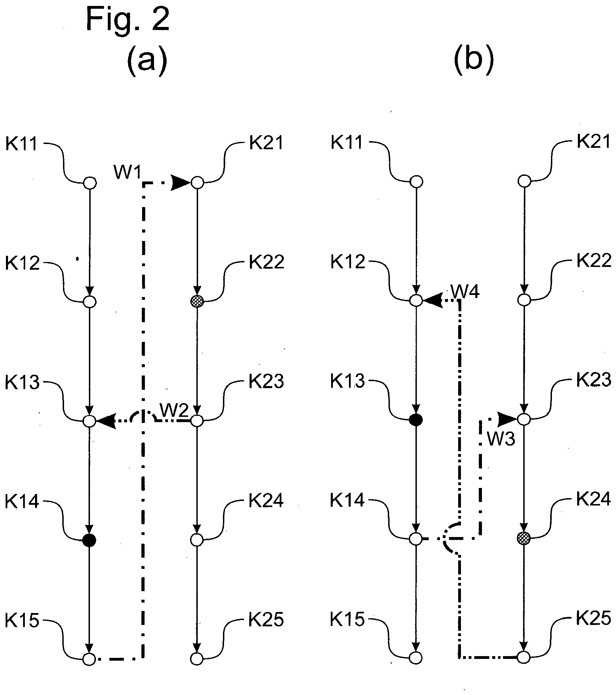

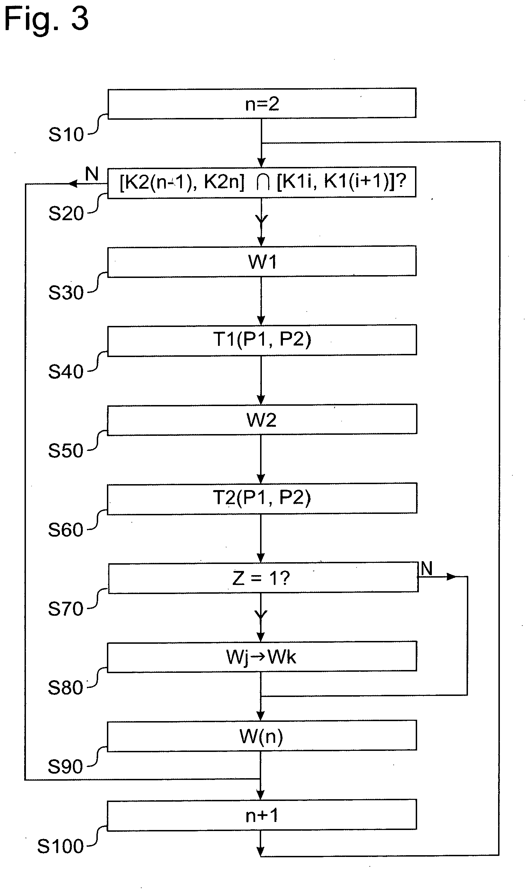

Um eine solche Kollision zu vermeiden, führt das System S ein nachfolgend mit Bezug auf Fig. 2, 3 näher erläutertes Verfahren zum Koordinieren der Pfade P1, P2 nach einer Ausführung der vorliegenden Erfindung durch.

Wie in Fig. 2 unter (a), (b) jeweils dargestellt, werden die Pfade P1, P2 in Form eines gerichteten azyklischen Graphen, die Pfadpunkte in Form von Knoten K11 - K25 und nachfolgend erläuterte Warteabhängigkeiten W1 - W4 in Form von gerichteten Querkanten zwischen Knoten vorgegeben.

Da der zusätzliche Pfad P2 nachträglich zu der bereits koordinierten Pfadanordnung P1 hinzugefügt wird, prüft das System in einem Schritt S20 (vgl. Fig. 3), ob bei dem ersten (Plan)Schritt bzw. Transfer des AGVs R2 von Pfadpunkt K21 zu Pfadpunkt K22 eine Kollision mit dem AGV R1 möglich ist. Falls dies nicht der Fall ist (S20: "N"), fährt das System mit dem nächsten (Plan)Schritt bzw. Transfer fort, ohne eine Warteabhängigkeiten festzulegen, indem es einen in Schritt S10 initialisierten Zähler in einem Schritt S100 inkrementiert und dann Schritt S20 für den (jeweils) nächsten (Plan)Schritt bzw. Transfer wiederholt.

Wie in Fig. 1 erkennbar, kann es jedoch bereits beim ersten (Plan)Schritt bzw. Transfer des AGVs R2 von Pfadpunkt K21 zu Pfadpunkt K22 zu einer Kollision mit dem AGV R1 kommen.

Daher wird im Graphen der Fig. 2, wie dort unter (a) dargestellt, für diesen (Plan)Schritt bzw. Transfer eine Konfliktzone des Pfads P1 ermittelt, die als einzigen Zwischenpunkt den möglichen Kollisionspunkt K14 sowie als ersten Pfadpunkt den unmittelbar vorhergehenden kollisionsfreien Pfadpunkt K13 und als letzten Pfadpunkt den unmittelbar nachfolgenden kollisionsfreien Pfadpunkt K15 umfasst.

Dann wird in einem Schritt S30 eine erste Warteabhängigkeit W1 zur Vermeidung dieser Kollision zwischen diesem letzten Pfadpunkt K15 unmittelbar nach der möglichen Kollision bei K14 und dem Startpunkt K21 unmittelbar vor der mögliche Kollision bei K14 des gerade untersuchten ersten (Plan)Schrittes bzw. Transfers K21 → K22 ermittelt, die ein Verlassen des Pfadpunktes K21 des zusätzlichen Pfades P2 erst nach Erreichen des Pfadpunktes K15 des anderen Pfades P1 gestattet und in Fig. 2 unter (a) als strichpunktierte gerichtete Querkante in dem Graphen eingezeichnet ist.

In einem Schritt S40 wird dann eine erste Ablaufzeit T1 zum gemeinsamen Abfahren der Pfade P1, P2 unter Einhaltung dieser ersten Warteabhängigkeit auf Basis der vorgegebenen bzw. vorab ermittelten Transferzeiten ermittelt.

In einem Schritt S50 wird in analoger Weise eine zu dieser ersten Warteabhängigkeit W1 alternative gegensinnige zweite Warteabhängigkeit W2 zur Vermeidung derselben Kollision bei K14 = K22 zwischen dem Pfadpunkt K23 unmittelbar nach der möglichen Kollision in K22 und dem Pfadpunkt K13 unmittelbar vor der mögliche Kollision bei K14 ermittelt, die umgekehrt ein Verlassen des Pfadpunktes K13 des Pfades P1 erst nach Erreichen des Pfadpunktes K23 des zusätzlichen Pfades P2 gestattet und in Fig. 2 unter (a) als strich-doppelpunktierte gerichtete Querkante in dem Graphen eingezeichnet ist.

In einem Schritt S60 wird dann eine zweite Ablaufzeit T2 zum gemeinsamen Abfahren der Pfade P1, P2 unter Einhaltung dieser alternativen gegensinnigen zweiten Warteabhängigkeit W2 auf Basis der vorgegebenen bzw. vorab ermittelten Transferzeiten ermittelt.

In einem Schritt S70 wird geprüft, ob durch (Umkehrung der ersten Warteabhängigkeit W1 in) diese zweite Warteabhängigkeit W2 eine Endloswarteabhängigkeit erzeugt bzw. in dem Graphen ein Zyklus geschlossen würde.

Da dies vorliegend nicht der Fall ist (S70: "N"), fährt das Verfahren bzw. System direkt mit Schritt S90 weiter. Andernfalls (S70: "Y") bzw. falls die zweite Warteabhängigkeit W2 eine Endloswarteabhängigkeit verursachen würde, würde in einem Zwischenschritt S80 zusätzlich eine nachfolgend erläuterte weitere Warteabhängigkeit W3 durch eine hierzu alternative gegensinnige andere Warteabhängigkeit W4 und gegebenenfalls noch weitere Warteabhängigkeiten ebenfalls durch alternative gegensinnige andere Warteabhängigkeiten ersetzt.

In Schritt S90 wird default- bzw. standardmäßig die erste Warteabhängigkeit W1, infolge der das hinzugefügte, niedriger priorisierte AGV R2 auf das höher priorisierte AGV R1 warten muss, als Warteabhängigkeit für den (Plan)Schritt bzw. Transfer K21 → K22 zur Vermeidung einer Kollision bei K14 festgelegt. Sofern jedoch die zweite Ablaufzeit T2 kürzer als die erste Ablaufzeit T1 und, gegebenenfalls durch Umkehrung einer oder mehrerer weiterer Warteabhängigkeiten (vgl. Schritt S80), ein gemeinsames endloswarteabhängigkeitsfreies Abfahren der Pfade P1, P2 unter Einhaltung der alternativen gegensinnigen zweiten Warteabhängigkeit W2 möglich ist, wird diese als Warteabhängigkeit für den (Plan)Schritt bzw. Transfer K21 → K22 zur Vermeidung einer Kollision bei K14 festgelegt bzw. die default- bzw. standardmäßige erste Warteabhängigkeit W1 durch sie ersetzt. Sofern selbst nach Umkehrung einer oder mehrerer weiterer Warteabhängigkeiten kein gemeinsames endloswarteabhängigkeitsfreies Abfahren möglich wird bzw. durch die zweite Warteabhängigkeit W2 eine unauflösbare Endloswarteabhängigkeit erzeugt wird, wird diese verworfen und für zukünftige Koordinierungen gesperrt.

Das Verfahren bzw. System fährt mit dem jeweils nächsten (Plan)Schritt bzw. Transfer K2(n-1) → K2n fort.

Im Ausführungsbeispiel wird exemplarisch beim gemeinsamen Pfadpunkt K13 = K24 eine weitere mögliche Kollision ermittelt. Daher wird hierfür, wie in Fig. 2 unter (b) dargestellt, in analoger, vorstehend erläuterter Weise auch hier default- bzw. standardmäßig die bzw. eine (erste bzw. weitere) Warteabhängigkeit W3, infolge der das AGV R2 im Pfadpunkt K23 warten muss, bis das AGV R1 den Pfadpunkt K14 erreicht hat, und eine hierzu alternative gegensinnige (zweite bzw. andere) Warteabhängigkeit W4 ermittelt, die umgekehrt ein Verlassen des Pfadpunkts K12 durch das AGV R1 erst gestattet, sobald das AGV R2 den Pfadpunkt K25 erreicht hat.

Im Ausführungsbeispiel werden exemplarisch die Warteabhängigkeiten W2 und W3 festgelegt, so dass das AGV R2 bereits aus K21 losfahren darf, ohne dass das AGV R1 das Erreichen des Pfadpunktes K23 abwarten muss, da es seinen Pfadpunkt K13 noch nicht erreicht hat (Warteabhängigkeit W2). Andererseits muss das AGV R1 nicht in K12 warten, bis das AGV R2 seinen Pfadpunkt K25 erreicht hat. Auf diese Weise kann die Ablaufzeit zum gemeinsamen Abfahren der Pfade P1, P2 minimiert und zugleich eine Kollision bei K14 = K22 oder K13 = K24 zuverlässig verhindert werden.

Obwohl in der vorhergehenden Beschreibung exemplarische Ausführungen erläutert wurden, sei darauf hingewiesen, dass eine Vielzahl von Abwandlungen möglich ist.

So wurde beispielsweise das Ausführungsbeispiel anhand einer gemeinsamen bzw. Gesamtablaufzeit als Gütekriterium(swert) illustriert, ohne dass die Erfindung auf dieses vorteilhafte Gütekriterium beschränkt ist. Wie bereits erläutert, kann das Gütekriterium insbesondere eine Priorisierung bzw. Hierarchisierung der Ablaufzeiten umfassen derart, dass das Gütekriterium bzw. sein Wert schlechter ist, falls sich die (Einzel)Ablaufzeit einer höher priorisierten Maschine, im Ausführungsbeispiel des AGV R1, verlängert, selbst wenn sich die (Einzel)Ablaufzeit einer niedriger priorisierten Maschine, im Ausführungsbeispiel des AGV R2, verkürzt, bzw. das Gütekriterium bzw. sein Wert nur besser ist, falls sich die (Einzel)Ablaufzeit einer höher priorisierten Maschine, im Ausführungsbeispiel des AGV R1, nicht verlängert und sich die (Einzel)Ablaufzeit wenigstens einer Maschine, im Ausführungsbeispiel des AGV R1 oder R2, verkürzt und/oder falls sich (wenigstens) die (Einzel)Ablaufzeit einer höher priorisierten Maschine, im Ausführungsbeispiel des AGV R1, verkürzt.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Verfahren zur wenigstens teilweise automatisierten Koordinierung einer Pfadanordnung einer Maschinenanordnung, die einen Pfad (P1) wenigstens einer ersten beweglichen Maschine (R1) der Maschinenanordnung aufweist, und eines zusätzlichen Pfads (P2) wenigstens einer zweiten beweglichen Maschine (R2), mit dem Schritt:
Festlegen (S90) wenigstens einer Warteabhängigkeit (W2; W3) zwischen einem Pfadpunkt (K13; K14) des Pfades (P1) der ersten Maschine (R1) der Maschinenanordnung und einem Pfadpunkt (K22; K24) des zusätzlichen Pfades (P2) zur Vermeidung einer Kollision der zweiten Maschine (R2) mit der ersten Maschine (R1) mit der Maßgabe, dass ein Gütekriterium (T) für ein gemeinsames Abfahren der Pfadanordnung (P1) und des zusätzlichen Pfades (P2) unter Einhaltung dieser Warteabhängigkeit (W2; W3) nicht schlechter, insbesondere besser, ist als unter Einhaltung einer hierzu alternativen gegensinnigen Warteabhängigkeit (W1; W4) zwischen einem Pfadpunkt (K15; K12) des Pfades (P1) der ersten Maschine (R1) und einem Pfadpunkt (K21; K25) des zusätzlichen Pfades (P2) zur Vermeidung derselben Kollision.

2. Verfahren nach Anspruch 1, **dadurch gekennzeichnet, dass** die Kollision vorab als mögliche Kollision beim gemeinsamen Abfahren der Pfadanordnung und des zusätzlichen Pfades ohne Einhaltung der wenigstens einen festgelegten Warteabhängigkeit ermittelt wird (S20).

3. Verfahren nach dem vorhergehenden Anspruch, **dadurch gekennzeichnet, dass** eine Warteabhängigkeit zwischen einem Pfadpunkt des Pfades der ersten Maschine und einem Pfadpunkt des zusätzlichen Pfades zur Vermeidung einer Kollision zwischen einem Pfadpunkt des einen Pfades nach der mögliche Kollision und einem Pfadpunkt des anderen Pfades vor der mögliche Kollision ermittelt wird (S30; S50).

4. Verfahren nach einem der vorhergehenden Ansprüche, **gekennzeichnet durch** die Schritte:
für wenigstens eine mögliche Kollision der zweiten Maschine (R2) mit der wenigstens einen esten Maschine (R1) der Maschinenanordnung:
Ermitteln (S40) eines ersten Wertes des Gütekriteriums (T1) für ein gemeinsames Abfahren der Pfadanordnung und des zusätzlichen Pfades unter Einhaltung einer ersten Warteabhängigkeit (W1; W3) zwischen einem Pfadpunkt des Pfades dieser ersten Maschine und einem Pfadpunkt des zusätzlichen Pfades zur Vermeidung dieser Kollision;
Ermitteln (S60) eines zweiten Wertes des Gütekriteriums (T2) für ein gemeinsames Abfahren der Pfadanordnung und des zusätzlichen Pfades unter Einhaltung einer hierzu alternativen gegensinnigen zweiten Warteabhängigkeit (W2; W4) zwischen einem Pfadpunkt des Pfades dieser ersten Maschine und einem Pfadpunkt des zusätzlichen Pfades zur Vermeidung dieser Kollision; und
Auswählen (S90) der ersten oder zweiten Warteabhängigkeit als festgelegte Warteabhängigkeit zur Vermeidung dieser Kollision auf Basis des ersten und zweiten Wertes des Gütekriteriums.

5. Verfahren nach einem der vorhergehenden Ansprüche, **gekennzeichnet durch** die Schritte:
für wenigstens eine Warteabhängigkeit zwischen einem Pfadpunkt des Pfades der ersten Maschine der Maschinenanordnung und einem Pfadpunkt des zusätzlichen Pfades:
Ersetzen (S80) wenigstens einer, insbesondere hierzu gegensinnigen, weiteren Warteabhängigkeit, insbesondere zwischen einem Pfadpunkt des Pfades der ersten Maschine und einem Pfadpunkt des zusätzlichen Pfades, durch eine zu dieser weiteren Warteabhängigkeit alternative gegensinnige andere Warteabhängigkeit, falls die eine Warteabhängigkeit eine Endloswarteabhängigkeit verursacht, insbesondere durch eine alternative gegensinnige andere Warteabhängigkeit zwischen einem Pfadpunkt des Pfades der ersten Maschine und einem Pfadpunkt des zusätzlichen Pfades.

6. Verfahren nach einem der vorhergehenden Ansprüche, **dadurch gekennzeichnet, dass** ein Pfad (P1; P2) mehrere Pfadpunkte (K11 ― K15; K21 ― K25) und Transfers, insbesondere Transferzeiten, zwischen den Pfadpunkten aufweist, wobei eine Warteabhängigkeit (W1, W3) ein Verlassen eines Pfadpunktes eines Pfades (P2) erst nach Erreichen eines Pfadpunktes eines anderen Pfades (P1) zur Vermeidung einer Kollision und eine hierzu alternative gegensinnige Warteabhängigkeit (W2, W4) ein Verlassen eines Pfadpunktes des anderen Pfades (P1) erst nach Erreichen eines Pfadpunktes des einen Pfades (P2) zur Vermeidung dieser Kollision gestattet.

7. Verfahren nach einem der vorhergehenden Ansprüche, **dadurch gekennzeichnet, dass** ein Pfad eine Fahrbahn eines automatisierten geführten Fahrzeugs (R1, R2) und/oder eine Trajektorie eines beweglichen Roboterarms aufweist.

8. Verfahren nach einem der vorhergehenden Ansprüche, **dadurch gekennzeichnet, dass** es wenigstens teilweise vor und/oder während einem gemeinsamen Abfahren der Pfadanordnung und des zusätzlichen Pfades durchgeführt wird.

9. Verfahren nach einem der vorhergehenden Ansprüche, **dadurch gekennzeichnet, dass** die Pfadanordnung gegenüber dem zusätzlichen Pfad defaultmäßig priorisiert ist.

10. Verfahren nach einem der vorhergehenden Ansprüche, **dadurch gekennzeichnet, dass** die Pfadanordnung und der zusätzliche Pfad in Form eines gerichteten azyklischen Graphen, Pfadpunkte in Form von Knoten und Warteabhängigkeiten in Form von gerichteten Querkanten zwischen Knoten vorgegeben werden.

11. System (S) zur wenigstens teilweise automatisierten Koordinierung einer Pfadanordnung einer Maschinenanordnung, die einen Pfad wenigstens einer ersten beweglichen Maschine der Maschinenanordnung aufweist, und eines zusätzlichen Pfads wenigstens einer zweiten beweglichen Maschine, das zur Durchführung eines Verfahrens nach einem der vorhergehenden Ansprüche eingerichtet ist und aufweist: Mittel zum Festlegen wenigstens einer Warteabhängigkeit zwischen einem Pfadpunkt eines Pfades der ersten Maschine der Maschinenanordnung und einem Pfadpunkt des zusätzlichen Pfades zur Vermeidung einer Kollision der zweiten Maschine mit dieser ersten Maschine mit der Maßgabe, dass ein Gütekriterium für ein gemeinsames Abfahren der Pfadanordnung und des zusätzlichen Pfades unter Einhaltung dieser Warteabhängigkeit nicht schlechter, insbesondere besser, ist als unter Einhaltung einer hierzu alternativen gegensinnigen Warteabhängigkeit zwischen einem Pfadpunkt des Pfades der ersten Maschine und einem Pfadpunkt des zusätzlichen Pfades zur Vermeidung derselben Kollision.

12. Computerprogrammprodukt mit einem Programmcode, der auf einem von einem Computer lesbaren Medium gespeichert ist, zur Durchführung eines Verfahrens nach einem der vorhergehenden Ansprüche 1-10.

## Claims

1. Method for the at least partially automated coordination of a path arrangement of a machine arrangement, which has a path (P1) of at least one first movable machine (R1) of the machine arrangement, and an additional path (P2) of at least one second movable machine (R2), with the step:
Establishing (S90) at least one waiting dependency (W2; W3) between a path point (K13; K14) of the path (P1) of the first machine (R1) of the machine arrangement and a path point (K22; K24) of the additional path (P2) to avoid a Collision of the second machine (R2) with the first machine (R1) with the proviso that a quality criterion (T) for a common travel along the path arrangement (P1) and the additional path (P2) while maintaining this waiting dependency (W2; W3) is not worse, in particular better, than maintaining an alternative, opposite waiting dependency (W1; W4) between a path point (K15; K12) of the path (P1) of the first machine (R1) and a path point (K21; K25) of the additional path (P2) to avoid the same collision.

2. Method according to Claim 1, **characterized in that** the collision is determined in advance as a possible collision when driving the path arrangement and the additional path together without observing the at least one defined waiting dependency (S20).

3. Method according to the preceding claim, **characterized in that** a waiting dependency between a path point of the path of the first machine and a path point of the additional path to avoid a collision between a path point of the one path after the possible collision and a path point of the other path before the possible collision is determined (S30; S50).

4. Method according to one of the preceding claims, **characterized by** the steps:
for at least one possible collision of the second machine (R2) with the first machine (R1) of the machine arrangement:
Determination (S40) of a first value of the quality criterion (T1) for a joint travel along the path arrangement and the additional path while maintaining a first waiting dependency (W1; W3) between a path point of the path of this first machine and a path point of the additional path to avoid this collision;
Determination (S60) of a second value of the quality criterion (T2) for a joint travel along the path arrangement and the additional path while maintaining an alternative, opposite, second waiting dependency (W2; W4) between a path point of the path of this first machine and a path point of the additional path to Avoiding this collision; and
Selecting (S90) the first or second waiting dependency as a defined waiting dependency to avoid this collision on the basis of the first and second values of the quality criterion.

5. Method according to one of the preceding claims, **characterized by** the steps:
for at least one waiting dependency between a path point of the path of the first machine of the machine arrangement and a path point of the additional path:
Replacing (S80) at least one, in particular opposite, further waiting dependency, in particular between a path point of the path of the first machine and a path point of the additional path, by another opposite waiting dependency alternative to this further waiting dependency, if the one waiting dependency causes an endless waiting dependency, in particular by an alternative, opposite waiting dependency between a path point of the path of the first machine and a path point of the additional path.

6. Method according to one of the preceding claims, **characterized in that** a path (P1; P2) has several path points (K11-K15; K21-K25) and transfers, in particular transfer times, between the path points, with a waiting dependency (W1, W3) leaving of a path point of a path (P2) only after reaching a path point of another path (P1) to avoid a collision and an alternative waiting dependency (W2, W4) in opposite directions, leaving a path point of the other path (P1) only after reaching a path point of one Path (P2) allowed to avoid this collision.

7. Method according to one of the preceding claims, **characterized in that** a path has a roadway of an automated guided vehicle (R1, R2) and / or a trajectory of a movable robot arm.

8. Method according to one of the preceding claims, **characterized in that** it is carried out at least partially before and / or during a common travel through the path arrangement and the additional path.

9. Method according to one of the preceding claims, **characterized in that** the path arrangement is prioritized with respect to the additional path by default.

10. Method according to one of the preceding claims, **characterized in that** the path arrangement and the additional path are specified in the form of a directed acyclic graph, path points in the form of nodes and waiting dependencies in the form of directed transverse edges between nodes.

11. System (S) for the at least partially automated coordination of a path arrangement of a machine arrangement, which has a path of at least one first movable machine of the machine arrangement, and an additional path of at least one second movable machine, which is and has for performing a method according to one of the preceding claims : Means for establishing at least one waiting dependency between a path point of a path of the first machine of the machine arrangement and a path point of the additional path to avoid a collision of the second machine with this first machine, with the proviso that a quality criterion for a common travel of the path arrangement and the additional Path while maintaining this waiting dependency is not worse, in particular better, than while maintaining an alternative waiting dependency in the opposite direction between a path point of the path of the first machine and a path point of the additional path to avoid the same collision.

12. Computer program product with a program code, which is stored on a medium readable by a computer, for carrying out a method according to one of the preceding claims 1-10.

## Revendications

1. Procédé pour la coordination au moins partiellement automatisée d'un agencement de chemins d'un agencement de machines, qui a un chemin (P1) d'au moins une première machine mobile (R1) de l'agencement de machines, et un chemin supplémentaire (P2) d'au moins une deuxième machine mobile (R2), avec l'étape:
Établissement (S90) d'au moins une dépendance d'attente (W2; W3) entre un point de chemin (K13; K14) du chemin (P1) de la première machine (R1) de l'agencement de machines et un point de chemin (K22; K24) de le trajet supplémentaire (P2) pour éviter une collision de la deuxième machine (R2) avec la première machine (R1) à condition qu'un critère de qualité (T) pour un trajet commun le long de la disposition de trajet (P1) et le chemin supplémentaire (P2) tout en maintenant cette dépendance d'attente (W2; W3) n'est pas pire, en particulier mieux, que le maintien d'une dépendance d'attente alternative opposée (W1; W4) entre un point de chemin (K15; K12) du chemin (P1) de la première machine (R1) et un point de chemin (K21; K25) du chemin supplémentaire ( P2) pour éviter la même collision.

2. Procédé selon la revendication 1, **caractérisé en ce que** la collision est déterminée à l'avance comme une collision possible lors de l'entraînement de l'agencement de chemins et du chemin supplémentaire ensemble sans respecter la au moins une dépendance d'attente définie (S20).

3. Procédé selon la revendication précédente, **caractérisé en ce qu'**une dépendance d'attente entre un point de chemin du chemin de la première machine et un point de chemin du chemin supplémentaire pour éviter une collision entre un point de chemin d'un chemin après la collision éventuelle et un point de trajet de l'autre trajet avant que la collision possible ne soit déterminée (S30; S50).

4. Procédé selon l'une des revendications précédentes, **caractérisé par** les étapes:
pour au moins une collision possible de la deuxième machine (R2) avec la première machine (R1) de l'agencement de machines:
Détermination (S40) d'une première valeur du critère de qualité (T1) pour un parcours conjoint le long de l'agencement de chemin et du chemin supplémentaire tout en maintenant une première dépendance d'attente (W1; W3) entre un point de chemin du chemin de ce premier machine et un point du chemin supplémentaire pour éviter cette collision;
Détermination (S60) d'une seconde valeur du critère de qualité (T2) pour un parcours conjoint le long de l'arrangement de chemin et du chemin supplémentaire tout en maintenant une seconde dépendance d'attente alternative, opposée, (W2; W4) entre un point de chemin du chemin de cette première machine et un point de chemin du chemin supplémentaire pour éviter cette collision; et
Sélection (S90) de la première ou de la deuxième dépendance d'attente en tant que dépendance d'attente définie pour éviter cette collision sur la base des première et deuxième valeurs du critère de qualité.

5. Procédé selon l'une des revendications précédentes, **caractérisé par** les étapes:
pour au moins une dépendance en attente entre un point de chemin du chemin de la première machine de l'agencement de machines et un point de chemin du chemin supplémentaire:
Remplacement (S80) d'au moins une autre dépendance d'attente, notamment opposée, notamment entre un point de chemin du chemin de la première machine et un point de chemin du chemin supplémentaire, par une autre dépendance d'attente opposée alternative à cette dépendance d'attente supplémentaire, si la dépendance d'attente unique provoque une dépendance d'attente sans fin, en particulier par une dépendance d'attente alternative opposée entre un point de chemin du chemin de la première machine et un point de chemin de l'autre chemin.

6. Procédé selon l'une des revendications précédentes, **caractérisé en ce qu'**un chemin (P1; P2) a plusieurs points de chemin (K11-K15; K21-K25) et des transferts, en particulier des temps de transfert, entre les points de chemin, avec une attente dépendance (W1, W3) laissant un point de chemin d'un chemin (P2) seulement après avoir atteint un point de chemin d'un autre chemin (P1) pour éviter une collision et une dépendance alternative en attente (W2, W4) dans des directions opposées, laissant un chemin point de l'autre chemin (P1) seulement après avoir atteint un point de chemin d'un chemin (P2) autorisé à éviter cette collision.

7. Procédé selon l'une des revendications précédentes, **caractérisé en ce qu'**un chemin comporte une chaussée d'un véhicule autoguidé (R1, R2) et/ou une trajectoire d'un bras de robot mobile.

8. Procédé selon l'une des revendications précédentes, **caractérisé en ce qu'**il est effectué au moins partiellement avant et/ou pendant un parcours commun à travers l'agencement de chemin et le chemin supplémentaire.

9. Procédé selon l'une des revendications précédentes, **caractérisé en ce que** la disposition des chemins est prioritaire par défaut par rapport au chemin supplémentaire.

10. Procédé selon l'une des revendications précédentes, **caractérisé en ce que** la disposition des chemins et le chemin supplémentaire sont spécifiés sous la forme d'un graphe orienté acyclique, des points de chemin sous forme de nœuds et des dépendances d'attente sous forme de bords transversaux dirigés entre nœuds.

11. Système (S) pour la coordination au moins partiellement automatisée d'un agencement de chemins d'un agencement de machines, qui a un chemin d'au moins une première machine mobile de l'agencement de machines, et un chemin supplémentaire d'au moins un deuxième mobile machine, qui est et a pour exécuter un procédé selon l'une des revendications précédentes : des moyens pour établir au moins une dépendance d'attente entre un point de chemin d'un chemin de la première machine de l'agencement de machines et un point de chemin du chemin supplémentaire vers éviter une collision de la deuxième machine avec cette première machine, à condition qu'un critère de qualité pour un parcours commun de l'agencement du chemin et du Chemin supplémentaire tout en maintenant cette dépendance d'attente ne soit pas pire, en particulier meilleur, qu'en maintenant une alternance dépendance d'attente tive en sens inverse entre un point de chemin du chemin de la première machine et un point de chemin du chemin supplémentaire pour éviter la même collision.

12. Produit de programme informatique avec un code de programme, qui est stocké sur un support lisible par un ordinateur, pour exécuter un procédé selon l'une des revendications précédentes 1 à 10.
